# EUROPEAN PATENT APPLICATION

(11) **EP 4 810 760 A1**
(43) Date of publication of application: **23.09.2026**
(21) Application number: 26165840.5
(22) Date of filing: 18.03.2026
(51) Int. Cl.: F01D 5/08, F01D 9/06, F01D 5/18

(54) **GAS TURBINE ENGINE WITH A SPLIT MIXED-FLOW TURBINE**

(30) Priority: 18.03.2025 US 202519083047
(71) Applicant: Pratt & Whitney Canada Corp., Longueuil, Québec J4G 1A1 (CA)
(72) Inventor: HAWIE, Eduardo, Woodbridge (CA); MENHEERE, Dave, Norval (CA)
(74) Representative: Dehns

(57) **Abstract**

A gas turbine engine (20) is provided that includes a compressor section (22), a combustor (24), and a mixed-flow turbine (26). The mixed-flow turbine (26) has a first turbine ("FT") rotor stage (32), an annular first vane stage (34), and a second turbine ("ST") rotor stage (36). The FT rotor stage (32) includes an FT disk (32A) and a plurality of FT rotor blades (32B) extending outwardly from the FT disk (32a). The ST rotor stage (36) includes an ST disk (36A) and a plurality of ST rotor blades extending outwardly from the ST disk (36A). The annular first vane stage (34) includes a plurality of stator vanes (42) that are distributed circumferentially, and disposed axially between the FT rotor stage (32) and the ST rotor stage (36). One or more of the stator vanes (42) includes a radially extending interior passage configured to permit a flow of cooling air to pass through the respective one or more stator vanes (42).

## Description

### BACKGROUND OF THE INVENTION

### 1. Technical Field

The present disclosure relates to gas turbine engines in general, and to axiallysplit radial turbines for usage within gas turbine engines in particular.

### 2. Background Information

Core gas flow passing through an axial turbine rotor stage travels in a direction that is generally perpendicular to the rotor blades within the rotor stage. Core gas flow passing through a radial turbine rotor stage enters the rotor stage tangentially and spirals radially inward. Axial turbines and radial turbines each possess advantages and disadvantages. Mixed-flow turbines may be described as a hybrid of an axial turbine and a radial turbine. It would be desirable to have a mixed-flow turbine that possesses advantages of axial turbine or radial turbine, while at the same time overcoming one or more disadvantages of an axial turbine and/or a radial turbine.

### SUMMARY

According to an aspect of the present disclosure, a gas turbine engine having an axial centerline is provided. The gas turbine engine includes a compressor section, a combustor, and a mixed-flow turbine. The mixed-flow turbine has a first turbine ("FT") rotor stage, an annular first vane stage, and a second turbine ("ST") rotor stage. The FT rotor stage and the ST rotor stage are rotatable around the axial centerline. The FT rotor stage includes an FT disk and a plurality of FT rotor blades extending outwardly from the FT disk. The ST rotor stage includes an ST disk and a plurality of ST rotor blades extending outwardly from the ST disk. The annular first vane stage includes a plurality of stator vanes that are distributed circumferentially, and disposed axially between the FT rotor stage and the ST rotor stage. One or more of the stator vanes includes a radially extending interior passage configured to permit a flow of cooling air to pass through the respective one or more stator vanes.

In any of the aspects or embodiments described above and herein, each stator vane may include a respective interior passage.

In any of the aspects or embodiments described above and herein, the plurality of FT rotor blades may each be configured to receive a first portion of the flow of cooling air passing through the respective one or more stator vanes.

In any of the aspects or embodiments described above and herein, the plurality of ST rotor blades may each be configured to receive a second portion of the flow of cooling air passing through the respective one or more stator vanes.

In any of the aspects or embodiments described above and herein, the plurality of ST rotor blades may each be configured to receive a second portion of the flow of cooling air passing through the respective one or more stator vanes.

In any of the aspects or embodiments described above and herein, the FT disk and the ST disk may be connected to one another by a first web element.

In any of the aspects or embodiments described above and herein, the compressor section may include a compressor rotor stage having a compressor rotor stage disk, and the FT disk and the compressor rotor stage disk may be connected to one another by a second web element.

In any of the aspects or embodiments described above and herein, the compressor rotor stage disk, the FT disk, and the ST disk may be connected to a first engine shaft.

In any of the aspects or embodiments described above and herein, the FT rotor stage may be configured to receive the flow of cooling air in a substantially inward radial direction.

In any of the aspects or embodiments described above and herein, the FT rotor stage may be configured to increase an axial component of the cooling air exiting the FT rotor stage.

In any of the aspects or embodiments described above and herein, the FT rotor stage may be an integrally bladed rotor.

In any of the aspects or embodiments described above and herein, the plurality of FT rotor blades may be mechanically attached to the FT disk.

According to an aspect of the present disclosure, a method for cooling a mixed-use turbine within a gas turbine engine is provided. The gas turbine engine has an axial centerline and includes a compressor section and a combustor section. The method includes providing a mixed-flow turbine having a first turbine ("FT") rotor stage, an annular first vane stage, and a second turbine ("ST") rotor stage. The FT rotor stage and the ST rotor stage are rotatable around the axial centerline. The FT rotor stage includes an FT disk and a plurality of FT rotor blades extending outwardly from the FT disk. The ST rotor stage includes an ST disk and a plurality of ST rotor blades extending outwardly from the ST disk. The annular first vane stage includes a plurality of stator vanes that are distributed circumferentially, and disposed axially between the FT rotor stage and the ST rotor stage. The one or more stator vanes of the plurality of stator vanes includes a radially extending interior passage configured to permit a flow of cooling air to pass through the respective one or more stator vanes. The method further includes: providing a cooling air flow radially outside of the annular first vane stage at a cooling air pressure greater than a core gas path pressure; directing the cooling air flow through the interior passage of each respective stator vane of the plurality of stator vanes; and directing at least a first portion of the cooling air flow into the FT rotor blades.

In any of the aspects or embodiments described above and herein, the method may include directing at least a second portion of the cooling air flow into the ST rotor blades.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. The following description and drawings are intended to be exemplary in nature and non-limiting.

### BRIEF DESCRIPTION OF THE DRAWINGS

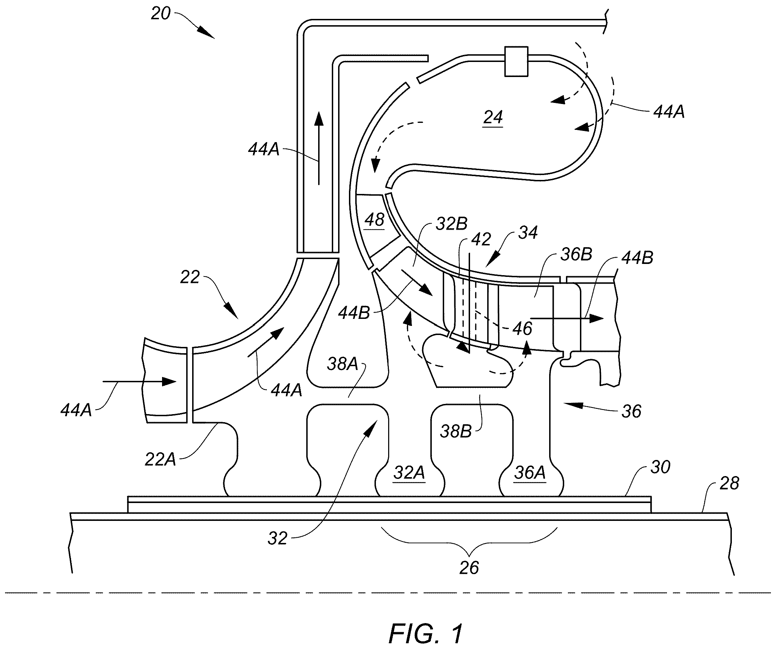

FIG. 1 is a diagrammatic illustration of a portion of a gas turbine engine.

### DETAILED DESCRIPTION

FIG. 1 is a diagrammatic cross-sectional view of a portion of a gas turbine engine 20, illustrating a compressor section 22, a combustor 24, and a mixed-flow turbine 26. The gas turbine engine 20 includes a low pressure (LP) shaft 28 and high pressure (HP) shaft 30 disposed in a coaxial arrangement. A compressor stage 22A of the compressor section 22 stage (e.g., a "high pressure compressor stage" or "HPC" stage) is engaged with the HP shaft 30.

The present disclosure mixed-flow turbine 26 may be utilized within various different types of gas turbine engines including, but not limited to, turbofans, turboprops, turboshafts, turbojets, or the like. A gas turbine engine 20 according to the present disclosure may be utilized within an aircraft, a watercraft, or a ground vehicle, or may be used for power generation. A gas turbine engine 20 according to the present disclosure may be used as a propulsion plant or may be used within an auxiliary power unit.

The present disclosure mixed-flow turbine 26 may be utilized within various different types of gas turbine engines including, but not limited to, turbofans, turboprops, turboshafts, turbojets, and the like. A gas turbine engine 20 according to the present disclosure may be utilized within an aircraft, a watercraft, or a ground vehicle, or may be used for power generation. A gas turbine engine 20 according to the present disclosure may be used as a propulsion plant or may be used within an auxiliary power unit.

The mixed-flow turbine 26 includes a first turbine rotor stage 32, a first turbine vane stage 34, and a second turbine rotor stage 36. The HPC compressor stage 22A, the first turbine rotor stage 32, and the second turbine rotor stage 36 are all engaged with the HP shaft 30. FIG. 1 also illustrates that the HPC compressor stage 22A, the first turbine rotor stage 32, and the second turbine rotor stage 36 are connected to one another by web elements 38A, 38B; e.g., the HPC compressor stage 22A disk is connected by web element 38A to the first turbine rotor stage disk (e.g., FT disk 32A - see below), and the first turbine rotor stage disk 32A is connected by web element 38B to the second turbine rotor stage disk (e.g., ST disk 36A - see below). The present disclosure does not require the HPC compressor stage 22A be web connected to the turbine rotor stages 32, 36, or that the first and second turbine rotor stages 32, 36 be connected to one another by web elements.

The terms "upstream" and "downstream" are used herein to indicate relative position. A component that is "upstream" will encounter core gas flow prior to a component that is "downstream". In the gas turbine engine 20 example shown in FIG. 1, the compressor section 22 is upstream of the combustor 24, and the first turbine rotor stage 32 is upstream of the second turbine rotor stage 36. The second turbine rotor stage 36 is downstream of the first turbine vane stage 34. The terms "inner radial" and "outer radial" refer to relative radial positions from the engine centerline 40; e.g., an inner radial component is disposed radially closer to the centerline 40 than an outer radial component.

The first turbine ("FT") rotor stage 32 includes an FT disk 32A and a plurality of FT rotor blades 32B extending outwardly (both radially and axially) from the FT disk 32A. In some embodiments, the FT disk 32A and the FT rotor blades 32B are integrally formed; e.g., an integrally bladed rotor. In some embodiments, the FT rotor blades 32B may be mechanically attached to the FT disk 32A; e.g., by mating rotor blade roots and disk slots. As will be described in greater detail herein, the radial and axial orientation of the FT rotor blades 32B is such that core gas flow encounters the FT rotor blades 32B in a substantially inward radial direction and exits the FT rotor blades 32B in a direction that has an axial component and a radial component. The term "substantially inward radial direction" as used herein is intended to mean that the contribution of the radial component of the core gas flow entering the FT rotor stage 32 is far greater than the axial component. The FT rotor blades 32B are configured to receive and pass cooling air in a manner that is intended to cool the respective FT rotor blade 32B. For example, an FT rotor blade 32B may include passages within a root region of the FT rotor blade 32B (not shown) that pass into the airfoil portion of the FT rotor blade 32B. Cooling apertures disposed in an exposed surface of the FT rotor blade 32B (e.g., at the leading edge, the trailing edge, the blade tip, and the like) provide a means of cooling air egress. Rotor blade cooling air architectures are known and the present disclosure is not limited to any particular architecture.

The second turbine ("ST") rotor stage 36 includes an ST disk 36A and a plurality of ST rotor blades 36B extending outwardly (both radially and axially) from the ST disk 36A. In some embodiments, the ST disk 36A and the ST rotor blades 36B are integrally formed; e.g., an integrally bladed rotor. In some embodiments, the ST rotor blades 36B may be mechanically attached to the ST disk 36A; e.g., by mating rotor blade roots and disk slots. The radial and axial orientation of the ST rotor blades 36B is such that core gas flow encounters the ST rotor blades 36B in a substantially axial direction and exits the ST rotor blades 36B in a substantially axial direction. In some embodiments, the ST rotor blades 36B may be configured to receive and pass cooling air in a manner that is intended to cool the respective ST rotor blade 36B. For example, an ST rotor blade 36B may include passages within a root region of the ST rotor blade 36B (not shown) that pass into the airfoil portion of the ST rotor blade 36B. Cooling apertures disposed in an exposed surface of the ST rotor blade 36B (e.g., the leading edge, the trailing edge, the blade tip, and the like) provide a means of cooling air egress. Rotor blade cooling air architectures are known and the present disclosure is not limited to any particular architecture.

The first turbine vane stage 34 is an annular structure that includes a plurality of stator vanes 42 that are distributed circumferentially. Each stator vane 42 is configured to direct core gas flow 44B exiting the first turbine rotor stage 32 in a desirable orientation for engagement with the downstream second turbine rotor stage 36. Each stator vane 42 includes at least one radial passage 46 (indicated by the dashed lines) that allows cooling air to travel in a radially inward direction through the stator vane 42 into a plenum disposed between the FT disk and the ST disk 36A.

In the gas turbine engine 20 embodiment shown in FIG. 1, an exit guide vane stage 48 is disposed in the core gas path downstream of the combustor 24 and upstream of the first turbine rotor stage 32. The present disclosure does not require an exit guide vane stage 48.

During operation of the gas turbine engine 20, air flow is drawn into the compressor section 22 and is worked to a higher pressure and temperature. The worked air flow 44A is passed into the combustor 24 where it is mixed with fuel and the mixture combusted. The gaseous byproducts of the combustion and any non-combusted air (collectively referred to as "core gas flow 44B") is directed to the first turbine rotor stage 32. In those embodiments that include an exit guide vane stage 48 downstream of the combustor 24, the core gas flow 44B will exit the exit guide vane stage 48 in a substantially inward radial direction and will encounter the rotating first turbine rotor stage 32. The core gas flow 44B passing through the first turbine rotor stage 32 exits in a direction that has an axial component and a radial component and encounters the first turbine vane stage 34. As it passes through the first turbine vane stage 34, the direction of the core gas flow 44B is further changed to increase the axial component and decrease the radial component. The core gas flow 44B encounters the second turbine rotor stage 36 in a substantially axial direction and exits the second turbine rotor stage 36 in a substantially axial direction. Thereafter the core gas flow 44B may encounter and transfer work to additional turbine rotor stages (e.g., low pressure turbine rotor stages).

Cooling air is provided at the outer radial end of the first turbine vane stage 34. The at least one passage 46 extending radially through each stator vane 42 allows the cooling air disposed radially outside of the first turbine vane stage 34 to pass through the vanes 42. The cooling air is at a temperature that is useful for cooling the FT rotor blades 32B, or the ST rotor blades 36B, or both, and may also be used to cool other components. Outside of the stator vane stage 34, the cooling air is at a pressure level that is sufficient to force the cooling air through the stator vanes 42, and into and out of the FT rotor blades 32B, or the ST rotor blades 36B, or both; e.g., a pressure that is higher than the pressure of the core gas flow 44B passing through this portion of the turbine section.

On the inner radial side of the first turbine vane stage 34, structure (not shown) is provided that directs the cooling air into the FT rotor blades 32B of the first turbine rotor stage 32, or into the ST rotor blades 36B of the second turbine rotor stage 36. FIG. 1 diagrammatically illustrates the path of the cooling air flow through the stator vanes 42 and into the FT rotor blades 32B and the ST rotor blades 36B using dashed lines. The present disclosure is not limited to any particular structure operable to direct the cooling air into the FT rotor blades 32B, or into the ST rotor blades 36B, or both.

The present disclosure provides a novel and unobvious system and method for cooling rotor blades within a mixed-flow turbine 26 of a gas turbine engine 20. The configuration of many prior art radial flow and/or mixed-flow turbines does not permit cooling of rotor blades within the radial flow segment of the turbine section. In these instances, the operation of the gas turbine engine 20 may be limited by operating temperature. The present disclosure overcomes the shortcomings of many prior art radial flow and/or mixed-flow turbines.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. A gas turbine engine having an axial centerline, comprising:
a compressor section;
a combustor; and
a mixed-flow turbine having a first turbine ("FT") rotor stage, an annular first vane stage, and a second turbine ("ST") rotor stage, wherein the FT rotor stage and the ST rotor stage are rotatable around the axial centerline;
wherein the FT rotor stage includes an FT disk and a plurality of FT rotor blades extending outwardly from the FT disk; and
wherein the ST rotor stage includes an ST disk and a plurality of ST rotor blades extending outwardly from the ST disk; and
wherein the annular first vane stage includes a plurality of stator vanes that are distributed circumferentially, and disposed axially between the FT rotor stage and the ST rotor stage; and
wherein one or more stator vanes of the plurality of stator vanes includes a radially extending interior passage configured to permit a flow of cooling air to pass through the respective one or more stator vanes.

2. The gas turbine engine of claim 1, wherein each stator vanes of the plurality of stator vanes includes a respective said interior passage.

3. The gas turbine engine of claim 1 or 2, wherein the plurality of FT rotor blades are each configured to receive a first portion of the flow of cooling air passing through the respective one or more stator vanes.

4. The gas turbine engine of claim 1, 2 or 3, wherein the plurality of ST rotor blades are each configured to receive a second portion of the flow of cooling air passing through the respective one or more stator vanes.

5. The gas turbine engine of any proceeding claim, wherein the FT disk and the ST disk are connected to one another by a first web element.

6. The gas turbine engine of claim 5, wherein the compressor section includes a compressor rotor stage having a compressor rotor stage disk; and
wherein the FT disk and the compressor rotor stage disk are connected to one another by a second web element.

7. The gas turbine engine of claim 6, wherein the compressor rotor stage disk, the FT disk, and the ST disk are connected to a first engine shaft.

8. The gas turbine engine of any preceding claim, wherein the FT rotor stage is configured to receive the flow of cooling air in a substantially inward radial direction; and/or
wherein the FT rotor stage is configured to increase an axial component of the cooling air exiting the FT rotor stage.

9. The gas turbine engine of any preceding claim, wherein the FT rotor stage is an integrally bladed rotor; or
wherein the plurality of FT rotor blades are mechanically attached to the FT disk.

10. A method for cooling a mixed-use turbine within a gas turbine engine, wherein the gas turbine engine has an axial centerline and includes a compressor section and a combustor section, the method comprising:
providing a mixed-flow turbine having a first turbine ("FT") rotor stage, an annular first vane stage, and a second turbine ("ST") rotor stage, wherein the FT rotor stage and the ST rotor stage are rotatable around the axial centerline;
wherein the FT rotor stage includes an FT disk and a plurality of FT rotor blades extending outwardly from the FT disk; and
wherein the ST rotor stage includes an ST disk and a plurality of ST rotor blades extending outwardly from the ST disk; and
wherein the annular first vane stage includes a plurality of stator vanes that are distributed circumferentially, and disposed axially between the FT rotor stage and the ST rotor stage; and
wherein one or more stator vanes of the plurality of stator vanes includes a radially extending interior passage configured to permit a flow of cooling air to pass through the respective one or more stator vanes;
providing a cooling air flow radially outside of the annular first vane stage at a cooling air pressure greater than a core gas path pressure;
directing the cooling air flow through the interior passage of each respective stator vane of the plurality of stator vanes; and
directing at least a first portion of the cooling air flow into the FT rotor blades.

11. The method of claim 10, further comprising the step of directing at least a second portion of the cooling air flow into the ST rotor blades.

12. The method of claim 10 or 11, wherein the FT disk and the ST disk are connected to one another by a first web element.

13. The method of claim 12, wherein the compressor section includes a compressor rotor stage having a compressor rotor stage disk; and
wherein the FT disk and the compressor rotor stage disk are connected to one another by a second web element.

14. The method of claim 13, wherein the compressor rotor stage disk, the FT disk, and the ST disk are connected to a first engine shaft.

15. The method of any of claims 10 to 14, wherein the FT rotor stage is configured to receive the flow of cooling air in a substantially inward radial direction; and/or
wherein the FT rotor stage is configured to increase an axial component of the cooling air exiting the FT rotor stage.
